# EUROPEAN PATENT APPLICATION

(11) **EP 1 509 054 A1**
(43) Date of publication of application: **23.02.2005**
(21) Application number: 03733083.4
(22) Date of filing: 27.05.2003
(51) Int. Cl.: H04Q 7/38

(54) **WIRELESS BASE STATION**

(30) Priority: 27.05.2002 JP 2002152614
(71) Applicant: NEC Corporation, Minato-ku, Tokyo 108-8001 (JP); NTT DoCoMo, Inc., Tokyo 100-6150 (JP)
(72) Inventor: KAJIMOTO, Satoshi c/o NEC Mobiling, Ltd., Yokohama-shi, Kanagawa 222-0033 (JP)
(74) Representative: Glawe. Delfs. Moll
(86) International application number: PCT/JP2003/006579
(87) International publication number: WO 2003/101142

(57) **Abstract**

In a wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other, the dedicated control channel (DCCH) used for establishing a call is designed to have a transmission rate higher than a transmission rate of the dedicated control channel (DCCH) in the channel comprised of the dedicated traffic channel (DTCH) and the dedicated control channel (DCCH) multiplexed to each other. The wireless base station makes it possible to shorten a stand-by time in which a user has to wait until communication starts.

## Description

### FIELD OF THE INVENTION

The invention relates to a wireless base station and a method of establishing and releasing a call in a wireless base station, and more particularly to a wireless base station which makes communication with a mobile terminal through a dedicated control channel (DCCH) and a dedicated traffic channel (DTCH) in accordance with an instruction received from a host node, and a method of establishing and releasing a call in such a wireless base station.

### PRIOR ART

A conventional wireless base station, on receipt of an instruction from a host node, establishes a call with a mobile terminal through DCCH, establishes communication through a channel comprised of DTCH and DCCH multiplexed to each other, maintains the communication, and releases a call through DCCH, in accordance with code division multiple access (CDMA).

Herein, DCCH indicates a channel through which control data relating to negotiation carried out until service (for instance, establishment of a call) a user requests is provided and/or control data (for instance, data indicative of interference) provided after the service has been established is transmitted between a wireless base station and a mobile terminal. DCCH is designed to have a transmission rate defined in accordance with 3GPP (3rd Generation Partnership Project (International standard defined with respect to CDMA)). In general, DCCH has a transmission rate of 13.6 kbps or 3.4 kbps.

DTCH indicates a channel through which data such as actual sound or packets is transmitted between mobile terminals or between a mobile terminal and a stationary terminal.

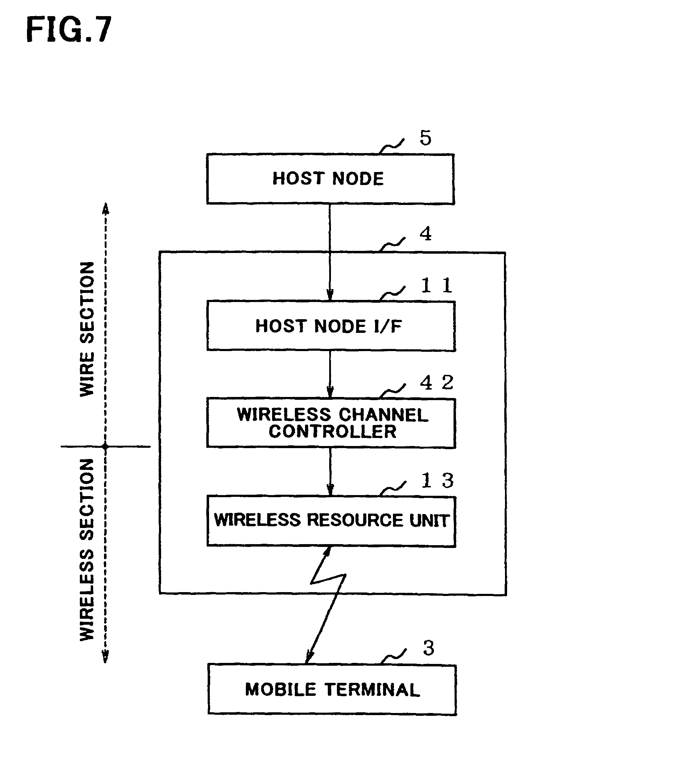

FIG. 7 is a block diagram of a structure of a conventional wireless base station.

As illustrated in FIG. 7, a conventional wireless base station 4 is designed to control wireless resources under control of a channel control unit as a host apparatus to the wireless base station 4, such as a host node 5.

The wireless base station 4 is comprised of a host node interface (I/F) 11 acting as an interface with the host node 5, a wireless channel controller 42 which analyzes data input from the host node 5, and carries out assignment of wireless resources in the wireless base station 4, and a wireless resource unit 13 which ensures and stores wireless resources in accordance with an instruction received from the wireless channel controller 42.

For instance, the wireless resource unit 13 is comprised of a plurality of modems.

Hereinbelow are explained establishment of a call between the wireless base station 4 and a mobile terminal 3, establishment of communication between the wireless base station 4 and the mobile terminal 3, and release of a call between the wireless base station 4 and the mobile terminal 3.

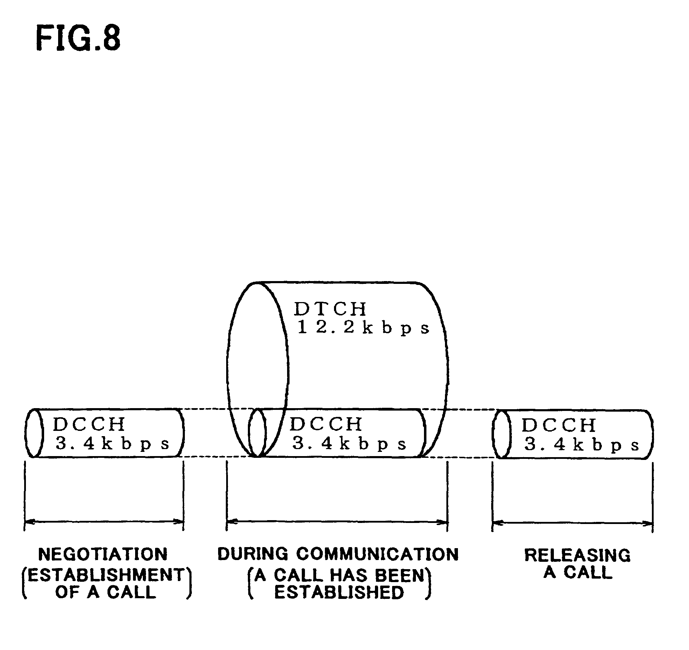

FIG. 8 shows a relation between channels used for establishing a call, establishing communication, and releasing a call between the wireless base station 4 and the mobile terminal 3, and transmission rates of the channels. As illustrated in FIG. 8, when a call is established (when negotiation is carried out), there is used DCCH having a transmission rate of 3.4 kbps (hereinafter, referred to as "DCCH (3.4)", during communication is made, there is used a channel comprised of DTCH having a transmission rate of 12.2 kbps (hereinafter, referred to as "DTCH (12.2)" and DCCH (3.4) multiplexed to each other, and when a call is released, there is used DCCH (3.4).

The mobile terminal 3 makes communication with the wireless base station 4 through the wireless resource unit 13 of the wireless base station 4.

The wireless base station 4 is not designed to spontaneously start establishment of a call, establishment of communication, and release of a call between the wireless base station 4 and the mobile terminal 3, but designed to do so in accordance with control messages received from the host node 5.

The wireless base station 4 uses two identity (ID) data in order to establish a call and maintain communication between the wireless base station 4 and the mobile terminal 3.

The two ID data is comprised of ID data (wire-section ID) used for identifying a user (that is, the mobile terminal 3) between the host node 5 and the wireless base station 4, and administrating DCCH and DTCH used by the user, and ID data (wireless-section ID) used for identifying a user between the wireless base station 4 and the mobile terminal 3.

The wireless base station 4 links those two ID data with each other to thereby establish a call between the wireless base station 4 and a user.

First, hereinbelow is explained an operation of the wireless base station 4 (called "negotiation") until a call between the wireless base station 4 and a user (the mobile terminal 3) is established.

First, assignment of the wire-section ID is carried out as follows.

The wireless base station 4 receives a message requesting establishment of a wire-section ID, from the host node 5 through the host node I/F 11.

The wireless channel controller 42 of the wireless base station 4, in accordance with the received message, keeps various parameters (parameters relating to data used for establishing DCCH (3.4), such as a band of a wire section) relating to a wire section, as user data, and assigns a wire-section ID included in the received message, to the user data.

Then, the wireless base station 4 receives a message requesting establishment of a wireless-section ID, from the host node 5 through the host node I/F 11.

The wireless channel controller 42 of the wireless base station 4, in accordance with the received message, keeps various parameters (parameters relating to data used for establishing DCCH (3.4), such as a band of a wireless section, power to be fed, or a wire-section ID to link with) relating to a wireless section, as user data, and assigns a wireless-section ID included in the received message, to the user data.

Then, the wireless channel controller 42 links the wire-section ID and the wireless-section ID with each other, and assigns actual resources to them.

For instance, a resource is comprised of a modem. A modem has constant capacity of upwardly and downwardly transmitting signals. Hence, when communication in a high transmission rate, such as packet communication, is to be carried out (for instance, communication at a transmission rate of 64 kbps, 128 kbps, 256 kbps or 384 kbps), a plurality of modems is assigned to a user. When communication in a low transmission rate, such as voice communication, is to be carried out (for instance, communication at a transmission rate of 12.2 kbps), one modem is assigned to a user.

In the case illustrated in FIG. 8, since DCCH (3.4) is to be established, one modem is assigned to a user.

Then, the wireless channel controller 42 instructs the wireless resource unit 13 to ensure the thus assigned resource, and the wireless resource unit 13 ensures the resource in accordance with the instruction.

The negotiation is thus carried out through DCCH (3.4) having been established in the above-mentioned steps, resulting in that a call is established between the wireless base station 4 and the mobile terminal 3 (see "negotiation" in FIG. 8).

Hereinbelow is explained an operation of the wireless base station 4 for establishing communication between the wireless base station 4 and the mobile terminal 3.

In the operation, DCCH (3.4) having been already established is multiplexed with DTCH used for transmitting actual user data (for instance, voice signals), or DTCH is added to DCCH. The addition of DTCH to DCCH is carried out in accordance with a request received from the host node 5, similarly to the operation of establishing DCCH.

The wireless base station 4 receives wire data used for establishing DTCH (for instance, data used for establishing DTCH (12.2)), as a request from the host node 5, through the host node I/F 11.

The wireless base station 4 further receives wireless data from the host node 5 through the host node I/F 11, as an instruction to link DCCH (3.4) and DTCH (12.2) to each other.

The wireless channel controller 42 of the wireless base station 4, in accordance with the received wireless data, adds the wire data used for establishing DTCH, to the wireless data used for linking the above-mentioned wire-section ID and wireless-section ID with each other.

Thereafter, the wireless channel controller 42 makes assignment of actual resources in accordance with the wireless data to which the wire data used for establishing DTCH is added.

Actually, the number of modems matching to a transmission rate for establishing DCCH (3.4) and DTCH (12.2) is assigned to a user, for instance.

Then, the wireless channel controller 42 of the wireless base station 4 instructs the wireless resource unit 13 to ensure the thus assigned resource, and the wireless resource unit 13 ensures the resource in accordance with the instruction.

In accordance with the above-mentioned steps, communication having a transmission rate of 15.6 kbps (resulted from multiplexing DCCH having a transmission rate of 3.4 kbps and DTCH having a transmission rate of 12.2 kbps to each other) is established (see "during communication" in FIG. 8).

Hereinbelow is explained an operation of the wireless base station 4 to be carried out for releasing a call between the wireless base station 4 and a user (the mobile terminal 3).

In the operation, DTCH (12.2) is released out of the communication established by DCCH (3.4) and DTCH (12.2) multiplexed to each other, and a call is released through DCCH (3.4).

DTCH (12.2) is released in accordance with a request transmitted from the host node 5, similarly to the addition of DTCH.

The wireless base station 4 receives a message from the host node 5 through the host node I/F 11 to release DTCH out of a call now being established.

The wireless channel controller 42 deletes data corresponding to DTCH (12.2) out of the user data (data used for establishing DCCH (3.4) with which data used for establishing DTCH (12.2) is linked) stored in correspondence to the wire-section ID and the wireless-section ID having been linked to each other, and instructs the wireless resource unit 13 to release the resource assigned to DTCH (12.2).

In accordance with the instruction, the wireless resource unit 13 releases the resource assigned to DTCH (12.2). Then, a call is released through DCCH (3.4) (see "releasing a call" in FIG. 8).

In the above-mentioned conventional wireless base station 4, DCCH is designed to have a transmission rate of 3.4 kbps in the negotiation carried out until a call is established between the wireless base station 4 and a user (the mobile terminal 3).

On the other hand, a user (the mobile terminal 3) has to wait until a call is established, because he/she cannon make communication until a call is established. That is, a period of time in which the negotiation is carried out is a stand-by time for a user (the mobile terminal 3). Accordingly, the conventional wireless base station 4 is accompanied with a problem that a user (the mobile terminal 3) had to wait long, because the transmission rate was set equal to 3.4 kbps, and hence, it took much time to accomplish the negotiation.

For instance, Japanese Patent Application Publication No. 2000-92023 has suggested a wireless base station which compresses data in accordance with a communication speed. Japanese Patent Application Publication No. 2000-316035 has suggested a method of selecting a data-communication speed for each of users. Japanese Patent Application Publication No. 2001-238255 has suggested a method of assigning a channel in packet communication between a mobile station and a base station in CDMA mobile communication system.

However, none of them is aware of the above-mentioned problem that a user (the mobile terminal 3) has to wait long, since it takes much time to accomplish the negotiation. Accordingly, they fail to suggest a solution to the problem.

In view of the above-mentioned problems in the conventional wireless base station, it is an object of the present invention to provide a wireless base station which is capable of shortening a time in which a user (mobile terminal) has to wait until he/she can make communication.

### DISCLOSURE OF THE INVENTION

In order to achieve the above-mentioned object, the present invention provides a wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other, characterized in that the dedicated control channel (DCCH) used for establishing a call is designed to have a transmission rate higher than a transmission rate of the dedicated control channel (DCCH) in the channel comprised of the dedicated traffic channel (DTCH) and the dedicated control channel (DCCH) multiplexed to each other.

In the wireless base station in accordance with the present invention, DCCH used for establishing a call is designed to have a transmission rate higher than a transmission rate of DCCH in the channel comprised of DTCH and DCCH multiplexed to each other, and used for establishing and maintaining communication. A call is established through DCCH having the thus increased transmission rate. This makes it possible to shorten a period of time for a user to have to wait until he/she can make communication.

For instance, the dedicated control channel (DCCH) used for establishing a call may have a transmission rate of 13.6 kbps, and the dedicated control channel (DCCH) used for establishing communication may have a transmission rate of 3.4 kbps.

For instance, the call may be established through the dedicated control channel (DCCH), and the communication may be established through the dedicated traffic channel (DTCH) and the dedicated control channel (DCCH) both in accordance with code division multiple access (CDMA).

The present invention provides a wireless base station which, on receipt of an instruction from a host node, establishes a call through a dedicated control channel (DCCH), establishes communication through a channel comprised of a dedicated traffic channel (DTCH) and a dedicated control channel (DCCH) multiplexed to each other, and releases a call through a dedicated control channel (DCCH), characterized in that the dedicated control channel (DCCH) used for releasing a call is designed to have a transmission rate higher than a transmission rate of the dedicated control channel (DCCH) in the channel comprised of the dedicated traffic channel (DTCH) and the dedicated control channel (DCCH) multiplexed to each other.

For instance, the dedicated control channel (DCCH) used for releasing a call may have a transmission rate of 13.6 kbps, and the dedicated control channel (DCCH) used for establishing communication may have a transmission rate of 3.4 kbps.

The present invention provides a wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other, characterized by a wireless channel controller which, in order to establish a channel used for establishing a call, receives an instruction from the host node to establish the dedicated control channel (DCCH) having a predetermined first transmission rate, determines resources in accordance with the received instruction, outputs a first instruction for ensuring the determined resources, receives both an instruction to establish the dedicated control channel (DCCH) having a predetermined second transmission rate lower than the predetermined first transmission rate, and an instruction to establish the dedicated traffic channel (DTCH), from the host node, determines resources in accordance with the received instructions, and outputs a second instruction for ensuring the determined resources, after the call has been established, in order to establish communication, and a wireless resource unit which, on receipt of the first instruction, ensures resources in accordance with the predetermined first transmission rate, and, on receipt of the second instruction, ensures resources in accordance with the predetermined second transmission rate and a transmission rate of the DTCH.

For instance, the wireless channel controller may be designed to receive an instruction from the host node to release the dedicated traffic channel (DTCH), after the communication has been established, in order to establish a channel used for releasing the call, release assignment of resources used for establishing the dedicated traffic channel (DTCH) in accordance with the instruction, and output a third instruction for releasing the resources, and the wireless resource unit may be designed to receive the third instruction, and release resources, corresponding to a transmission rate of the dedicated traffic channel (DTCH), having been ensured for the dedicated traffic channel (DTCH).

As an alternative, the wireless channel controller may be designed to receive an instruction from the host node to release the dedicated traffic channel (DTCH), after the communication has been established, in order to establish a channel used for releasing the call, release assignment of resources used for establishing the dedicated traffic channel (DTCH) in accordance with the instruction, output a third instruction for releasing the resources, receive an instruction to establish the DCCH having the predetermined first transmission rate, determine resources in accordance with the thus received instruction, and output the first instruction for ensuring the determined resources, and the wireless resource unit may be designed to receive the third instruction, releases resources, corresponding to a transmission rate of the dedicated traffic channel (DTCH), having been ensured for the dedicated traffic channel (DTCH), and receive the first instruction to ensure resources corresponding to the predetermined first transmission rate.

The present invention provides a wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other, characterized by a wireless channel controller which, in order to establish a channel used for establishing a call, assigns wire-section ID to a parameter relating to a wire-section used for establishing the dedicated control channel (DCCH) having a predetermined first transmission rate, in accordance with an instruction received from the host node, stores the parameter therein as user data, assigns wireless-section ID to a parameter relating to a wireless-section used for establishing the dedicated control channel (DCCH) having the predetermined first transmission rate, in accordance with an instruction received from the host node, stores the parameter therein as user data, links the wire-section ID and the wireless-section ID to each other, determines resources in accordance with the predetermined first transmission rate, outputs a first instruction to ensure the thus determined resources, receives first wire data from the host node to establish the dedicated control channel (DCCH) having a predetermined second transmission rate lower than the first transmission rate, replaces the parameter in the user data, which is used for establishing the dedicated control channel (DCCH) having the first transmission rate, and to which the wire-section ID was assigned, with a parameter used for establishing the dedicated control channel (DCCH) having the predetermined second transmission rate, receives second wire data used for establishing the dedicated traffic channel (DTCH), and an instruction for linking the dedicated control channel (DCCH) and the dedicated traffic channel (DTCH) to each other, from the host node, adds the second wire data to user data associated with the wire-section ID and user data associated with the wireless-section ID to establish the dedicated traffic channel (DTCH), determines resources in accordance with the second transmission rate and a transmission rate of the dedicated traffic channel (DTCH), and outputs a second instruction to ensure the determined resources, and a wireless resource unit which, on receipt of the first instruction, ensures resources in accordance with the predetermined first transmission rate, and, on receipt of the second instruction, ensures resources in accordance with the predetermined second transmission rate and a transmission rate of the dedicated traffic channel (DTCH).

For instance, the wireless channel controller may be designed to delete a parameter used for establishing the dedicated traffic channel (DTCH), out of data to which the second wire data used for establishing the dedicated traffic channel (DTCH) is added, in accordance with an instruction received from the host node, after the communication has been established, in order to establish a channel used for releasing the call, releases assignment of resources used for establishing the dedicated traffic channel (DTCH), and output a third instruction for releasing the resources, and the wireless resource unit may be designed to receive the third instruction, and releases resources, corresponding to a transmission rate of the dedicated traffic channel (DTCH), having been ensured for the dedicated traffic channel (DTCH).

As an alternative, the wireless channel controller may be designed to receive third wire data used for establishing the dedicated control channel (DCCH) having the first transmission rate, from the host node, after the communication has been established, in order to establish a channel used for releasing the call, replace a parameter in the user data, which is used for establishing the dedicated control channel (DCCH) having the second transmission rate, and to which the wire-section ID was assigned, with a parameter used for establishing the dedicated control channel (DCCH) having the predetermined first transmission rate, delete a parameter used for establishing the dedicated traffic channel (DTCH), out of data to which the second wire data used for establishing the dedicated traffic channel (DTCH) is added, in accordance with an instruction received from the host node, release assignment of resources used for establishing the dedicated traffic channel (DTCH), output a third instruction for releasing the resources, and output a fourth instruction to switch to the dedicated control channel (DCCH) having the first transmission rate, and the wireless resource unit may be designed to, on receipt of the third instruction, release resources, corresponding to a transmission rate of the dedicated traffic channel (DTCH), having been ensured for the dedicated traffic channel (DTCH), and, on receipt of the fourth instruction, ensure resources corresponding to the first transmission rate.

The present invention provides a wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other, characterized by a wireless channel controller which, in order to establish a channel used for establishing a call, receives a request of establishing a wire-section ID from the host node, stores, as user data, a parameter relating to a wire-section used for establishing the dedicated control channel (DCCH) having a predetermined first transmission rate, in accordance with the request, assigns a wire-section ID included in the request of establishing the wire-section ID, to the user data, receives a request of establishing a wireless-section ID from the host node, stores, as user data, a parameter relating to a wireless-section used for establishing the dedicated control channel (DCCH) having the first transmission rate, in accordance with the request, assigns a wireless-section ID included in the request of establishing the wireless-section ID, to the user data, links the wire-section ID and the wireless-section ID to each other, determines resources in accordance with the predetermined first transmission rate, outputs a first instruction to ensure the thus determined resources, receives first wire data from the host node to establish the dedicated control channel (DCCH) having a predetermined second transmission rate lower than the first transmission rate, after a call has been established, in order to establish a channel used for establishing communication, replaces the parameter in the user data, which is used for establishing the dedicated control channel (DCCH) having the first transmission rate, and to which the wire-section ID was assigned, with a parameter used for establishing the dedicated control channel (DCCH) having the predetermined second transmission rate, in accordance with the first wire data, receives second wire data used for establishing the dedicated traffic channel (DTCH) from the host node, receives an instruction for linking the dedicated control channel (DCCH) and the dedicated traffic channel (DTCH) to each other, from the host node, adds the second wire data to user data associated with the wire-section ID and user data associated with the wireless-section ID to establish the dedicated traffic channel (DTCH), determines resources in accordance with the second transmission rate and a transmission rate of the dedicated traffic channel (DTCH), based on the second wire data, and outputs a second instruction to ensure the determined resources, a wireless resource unit which, on receipt of the first instruction, ensures resources in accordance with the predetermined first transmission rate, and, on receipt of the second instruction, ensures resources in accordance with the predetermined second transmission rate and a transmission rate of the dedicated traffic channel (DTCH).

For instance, the wireless channel controller may be designed to, after the communication has been established, in order to establish a channel used for releasing a call, receive a message from the host node to release the dedicated traffic channel (DTCH), delete a parameter used for establishing the dedicated traffic channel (DTCH), out of data to which the second wire data used for establishing the dedicated traffic channel (DTCH) is added, in accordance with the message, release assignment of resources used for establishing the dedicated traffic channel (DTCH), and output a third instruction for releasing the resources, and the wireless resource unit may be designed to receive the third instruction, and, in accordance with the third instruction, release resources, corresponding to a transmission rate of the dedicated traffic channel (DTCH), having been ensured for the dedicated traffic channel (DTCH).

As an alternative, the wireless channel controller may be designed to receive third wire data used for establishing the dedicated control channel (DCCH) having the first transmission rate, from the host node, after the communication has been established, in order to establish a channel used for releasing the call, replace a parameter in the user data, which is used for establishing the dedicated control channel (DCCH) having the second transmission rate, and to which the wire-section ID was assigned, with a parameter used for establishing the dedicated control channel (DCCH) having the predetermined first transmission rate, in accordance with the third wire data, receive a message from the host node for releasing the dedicated traffic channel (DTCH), delete a parameter used for establishing the dedicated traffic channel (DTCH), out of data to which the second wire data used for establishing the dedicated traffic channel (DTCH) is added, in accordance with an instruction received from the host node, release assignment of resources used for establishing the dedicated traffic channel (DTCH), in accordance with the message, output a third instruction for releasing the resources, and output a fourth instruction to switch to the dedicated control channel (DCCH) having the first transmission rate, and the wireless resource unit may be designed to receive the third instruction, releases resources, corresponding to a transmission rate of the dedicated traffic channel (DTCH), having been ensured for the dedicated traffic channel (DTCH), and, on receipt of the fourth instruction, ensure resources corresponding to the first transmission rate.

For instance, the first transmission rate may be set equal to 13.6 kbps, and the second transmission rate may be set equal to 3.4 kbps.

In the above-mentioned wireless base station, the call may be established through the dedicated control channel (DCCH), and the communication may be established through the dedicated traffic channel (DTCH) and the dedicated control channel (DCCH) both in accordance with CDMA.

The present invention provides a method of establishing a call in a wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other, characterized by the step of designing the dedicated control channel (DCCH) used for establishing a call is designed to have a transmission rate higher than a transmission rate of the dedicated control channel (DCCH) in the channel comprised of the dedicated traffic channel (DTCH) and the dedicated control channel (DCCH) multiplexed to each other.

For instance, the dedicated control channel (DCCH) used for establishing a call may have a transmission rate of 13.6 kbps, and the dedicated control channel (DCCH) used for establishing communication may have a transmission rate of 3.4 kbps.

For instance, the call may be established through the dedicated control channel (DCCH), and the communication may be established through the dedicated traffic channel (DTCH) and the dedicated control channel (DCCH) both in accordance with code division multiple access (CDMA).

There is provided a method of releasing a call in a wireless base station which, on receipt of an instruction from a host node, establishes a call through a dedicated control channel (DCCH), establishes communication through a channel comprised of a dedicated traffic channel (DTCH) and a dedicated control channel (DCCH) multiplexed to each other, and releases a call through a dedicated control channel (DCCH), characterized by the step of designing the dedicated control channel (DCCH) used for releasing a call is designed to have a transmission rate higher than a transmission rate of the dedicated control channel (DCCH) in the channel comprised of the dedicated traffic channel (DTCH) and the dedicated control channel (DCCH) multiplexed to each other.

For instance, the dedicated control channel (DCCH) used for releasing a call may have a transmission rate of 13.6 kbps, and the dedicated control channel (DCCH) used for establishing communication may have a transmission rate of 3.4 kbps.

The present invention provides a method of establishing and releasing a call in wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other, characterized by the steps of receiving an instruction from the host node to establish the dedicated control channel (DCCH) having a predetermined first transmission rate, in order to establish a channel used for establishing a call, determining resources in accordance with the received instruction, and outputting a first instruction for ensuring the determined resources, receiving both an instruction to establish the dedicated control channel (DCCH) having a predetermined second transmission rate lower than the predetermined first transmission rate, and an instruction to establish the dedicated traffic channel (DTCH), from the host node, determining resources in accordance with the received instructions, and outputting a second instruction for ensuring the determined resources, after the call has been established, in order to establish communication, in line with the first instruction, ensuring resources in accordance with the predetermined first transmission rate, and in line with the second instruction, ensuring resources in accordance with the predetermined second transmission rate and a transmission rate of the DTCH.

The method may further include the steps of receiving an instruction from the host node to release the dedicated traffic channel (DTCH), after the communication has been established, in order to establish a channel used for releasing the call, releasing assignment of resources used for establishing the dedicated traffic channel (DTCH) in accordance with the instruction, and outputting a third instruction for releasing the resources, and in line with the third instruction, releasing resources, corresponding to a transmission rate of the dedicated traffic channel (DTCH), having been ensured for the dedicated traffic channel (DTCH).

The method may further include the steps of receiving an instruction from the host node to release the dedicated traffic channel (DTCH), after the communication has been established, in order to establish a channel used for releasing the call, releasing assignment of resources used for establishing the dedicated traffic channel (DTCH) in accordance with the instruction, and outputting a third instruction for releasing the resources, receiving an instruction from the host node to establish the DCCH having the predetermined first transmission rate, determines resources in accordance with the thus received instruction, and outputting the first instruction for ensuring the determined resources, and receiving the third instruction, releasing resources, corresponding to a transmission rate of the dedicated traffic channel (DTCH), having been ensured for the dedicated traffic channel (DTCH), and receiving the first instruction to ensure resources corresponding to the predetermined first transmission rate.

The present invention provides a method of establishing and releasing a call in a wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other, characterized by the steps of, in order to establish a channel used for establishing a call, assigning wire-section ID to a parameter relating to a wire-section used for establishing the dedicated control channel (DCCH) having a predetermined first transmission rate, in accordance with an instruction received from the host node, and storing the parameter therein as user data, assigning wireless-section ID to a parameter relating to a wireless-section used for establishing the dedicated control channel (DCCH) having the predetermined first transmission rate, in accordance with an instruction received from the host node, and storing the parameter therein as user data, linking the wire-section ID and the wireless-section ID to each other, determining resources in accordance with the predetermined first transmission rate, and outputting a first instruction to ensure the thus determined resources, receiving first wire data from the host node to establish the dedicated control channel (DCCH) having a predetermined second transmission rate lower than the first transmission rate, and replacing the parameter in the user data, which is used for establishing the dedicated control channel (DCCH) having the first transmission rate, and to which the wire-section ID was assigned, with a parameter used for establishing the dedicated control channel (DCCH) having the predetermined second transmission rate, receiving second wire data used for establishing the dedicated traffic channel (DTCH), and an instruction for linking the dedicated control channel (DCCH) and the dedicated traffic channel (DTCH) to each other, from the host node, adding the second wire data to user data associated with the wire-section ID and user data associated with the wireless-section ID to establish the dedicated traffic channel (DTCH), determining resources in accordance with the second transmission rate and a transmission rate of the dedicated traffic channel (DTCH), and outputting a second instruction to ensure the determined resources, in line with the first instruction, ensuring resources in accordance with the predetermined first transmission rate, and in line with the second instruction, ensuring resources in accordance with the predetermined second transmission rate and a transmission rate of the dedicated traffic channel (DTCH).

The method may further include the steps of deleting a parameter used for establishing the dedicated traffic channel (DTCH), out of data to which the second wire data used for establishing the dedicated traffic channel (DTCH) is added, in accordance with an instruction received from the host node, after the communication has been established, in order to establish a channel used for releasing the call, releasing assignment of resources used for establishing the dedicated traffic channel (DTCH), and outputting a third instruction for releasing the resources, and receiving the third instruction, and releasing resources, corresponding to a transmission rate of the dedicated traffic channel (DTCH), having been ensured for the dedicated traffic channel (DTCH).

The method may further include the steps of receiving third wire data used for establishing the dedicated control channel (DCCH) having the first transmission rate, from the host node, after the communication has been established, in order to establish a channel used for releasing the call, and replacing a parameter in the user data, which is used for establishing the dedicated control channel (DCCH) having the second transmission rate, and to which the wire-section ID was assigned, with a parameter used for establishing the dedicated control channel (DCCH) having the predetermined first transmission rate, deleting a parameter used for establishing the dedicated traffic channel (DTCH), out of data to which the second wire data used for establishing the dedicated traffic channel (DTCH) is added, in accordance with an instruction received from the host node, releasing assignment of resources used for establishing the dedicated traffic channel (DTCH), outputting a third instruction for releasing the resources, and outputting a fourth instruction to switch to the dedicated control channel (DCCH) having the first transmission rate, and on receipt of the third instruction, releasing resources, corresponding to a transmission rate of the dedicated traffic channel (DTCH), having been ensured for the dedicated traffic channel (DTCH), and, on receipt of the fourth instruction, ensuring resources corresponding to the first transmission rate.

The present invention provides a method of establishing and releasing a call in a wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other, characterized by the steps of in order to establish a channel used for establishing a call, receiving a request of establishing a wire-section ID from the host node, storing, as user data, a parameter relating to a wire-section used for establishing the dedicated control channel (DCCH) having a predetermined first transmission rate, in accordance with the request, and assigning a wire-section ID included in the request of establishing the wire-section ID, to the user data, receiving a request of establishing a wireless-section ID from the host node, storing, as user data, a parameter relating to a wireless-section used for establishing the dedicated control channel (DCCH) having the first transmission rate, in accordance with the request, and assigning a wireless-section ID included in the request of establishing the wireless-section ID, to the user data, linking the wire-section ID and the wireless-section ID to each other, determining resources in accordance with the predetermined first transmission rate, and outputting a first instruction to ensure the thus determined resources, receiving first wire data from the host node to establish the dedicated control channel (DCCH) having a predetermined second transmission rate lower than the first transmission rate, after a call has been established, in order to establish a channel used for establishing communication, and replacing the parameter in the user data, which is used for establishing the dedicated control channel (DCCH) having the first transmission rate, and to which the wire-section ID was assigned, with a parameter used for establishing the dedicated control channel (DCCH) having the predetermined second transmission rate, in accordance with the first wire data, receiving second wire data used for establishing the dedicated traffic channel (DTCH) from the host node, receiving an instruction for linking the dedicated control channel (DCCH) and the dedicated traffic channel (DTCH) to each other, from the host node, adding the second wire data to user data associated with the wire-section ID and user data associated with the wireless-section ID to establish the dedicated traffic channel (DTCH), determining resources in accordance with the second transmission rate and a transmission rate of the dedicated traffic channel (DTCH), based on the second wire data, and outputting a second instruction to ensure the determined resources, in line with the first instruction, ensuring resources in accordance with the predetermined first transmission rate, and in line with the second instruction, ensuring resources in accordance with the predetermined second transmission rate and a transmission rate of the dedicated traffic channel (DTCH).

The method may further include the steps of after the communication has been established, in order to establish a channel used for releasing a call, receiving a message from the host node to release the dedicated traffic channel (DTCH), deleting a parameter used for establishing the dedicated traffic channel (DTCH), out of data to which the second wire data used for establishing the dedicated traffic channel (DTCH) is added, in accordance with the message, releasing assignment of resources used for establishing the dedicated traffic channel (DTCH), and outputting a third instruction for releasing the resources, and in line with the third instruction, releasing resources, corresponding to a transmission rate of the dedicated traffic channel (DTCH), having been ensured for the dedicated traffic channel (DTCH).

The method may further include the steps of receiving third wire data used for establishing the dedicated control channel (DCCH) having the first transmission rate, from the host node, after the communication has been established, in order to establish a channel used for releasing the call, and replacing a parameter in the user data, which is used for establishing the dedicated control channel (DCCH) having the second transmission rate, and to which the wire-section ID was assigned, with a parameter used for establishing the dedicated control channel (DCCH) having the predetermined first transmission rate, in accordance with the third wire data, receiving a message from the host node for releasing the dedicated traffic channel (DTCH), deleting a parameter used for establishing the dedicated traffic channel (DTCH), out of data to which the second wire data used for establishing the dedicated traffic channel (DTCH) is added, in accordance with an instruction received from the host node, releasing assignment of resources used for establishing the dedicated traffic channel (DTCH), in accordance with the message, outputting a third instruction for releasing the resources, and outputting a fourth instruction to switch to the dedicated control channel (DCCH) having the first transmission rate, and in line with the third instruction, releasing resources, corresponding to a transmission rate of the dedicated traffic channel (DTCH), having been ensured for the dedicated traffic channel (DTCH), and, on receipt of the fourth instruction, ensuring resources corresponding to the first transmission rate.

### BRIEF DESCRIPTION OF THE DRAWINGS

FIG. 1 is a block diagram of a structure of a wireless base station in accordance with the first embodiment of the present invention.
FIG. 2 is a flow-chart of an example of an operation to be carried out by the wireless base station in accordance with the first embodiment for establishing a call.
FIG. 3 is a flow-chart of an example of an operation to be carried out by the wireless base station in accordance with the first embodiment for establishing communication.
FIG. 4 is a flow-chart of an example of an operation to be carried out by the wireless base station in accordance with the first embodiment for releasing a call.
FIG. 5 shows a first example of a relation between channels used for establishing a call, establishing communication, and releasing a call, and transmission rates of the channels in the wireless base station in accordance with the first embodiment.
FIG. 6 shows a second example of a relation between channels used for establishing a call, establishing communication, and releasing a call, and transmission rates of the channels in the wireless base station in accordance with the first embodiment.
FIG. 7 is a block diagram of a structure of a conventional wireless base station.
FIG. 8 shows a relation between channels used for establishing a call, establishing communication and releasing a call, and transmission rates of the channels in the conventional wireless base station.

### DESCRIPTION OF THE PREFERRED EMBODIMENT

A preferred embodiment in accordance with the present invention will be explained hereinbelow with reference to drawings.

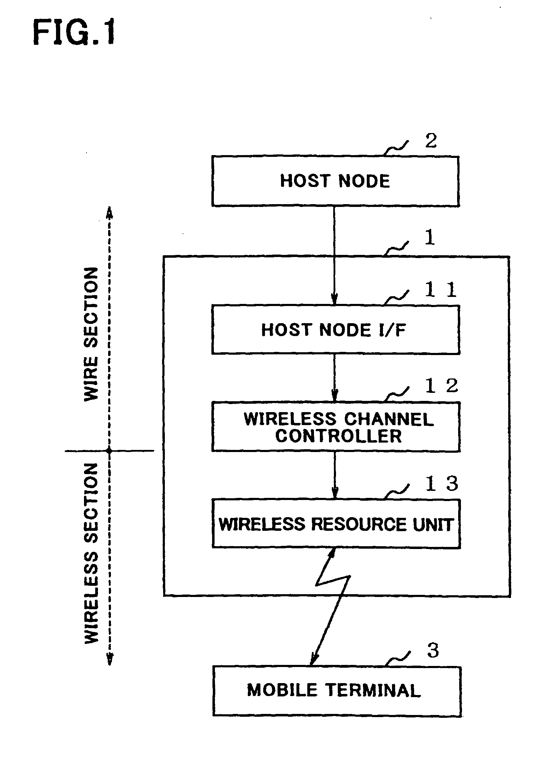

FIG. 1 is a block diagram of a structure of a wireless base station in accordance with the first embodiment of the present invention.

The wireless base station 1 in accordance with the first embodiment, illustrated in FIG. 1, is comprised of a host node interface (I/F) 11 acting as an interface with a channel control station as a host apparatus to the wireless base station 1, such as a host node 2, a wireless channel controller 12 which analyzes data input from the host node 2, and carries out assignment of wireless resources in the wireless base station 1, and a wireless resource unit 13 which ensures and stores actual wireless resources in accordance with an instruction received from the wireless channel controller 12.

With reference to FIG. 1, the wireless base station 1 establishes a call between the wireless base station 1 and a mobile terminal 3 through DCCH, establishes communication through a channel comprised of DTCH and DCCH multiplexed to each other, maintains the communication, and releases a call through DCCH, in accordance with CDMA in line with an instruction received from the host node 2.

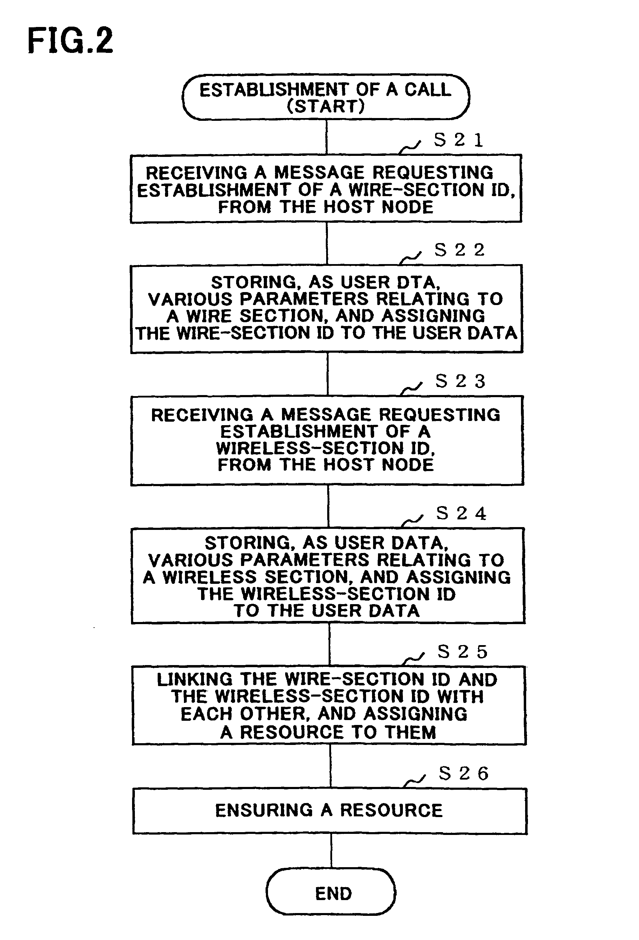

Hereinbelow is explained each operation of the wireless base station 1 in accordance with the first embodiment with reference to FIGs. 2, 3, 4, 5 and 6.

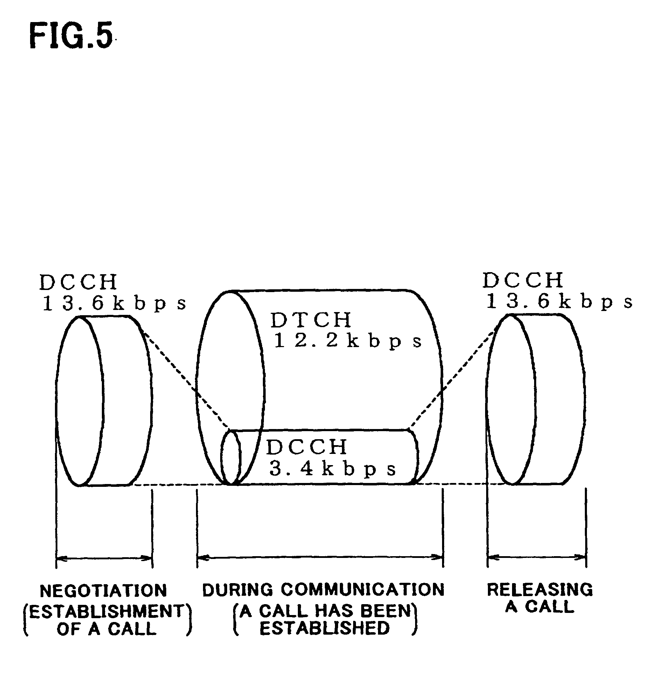

FIG. 5 shows a first example of a relation between channels used for establishing a call, establishing communication, and releasing a call, and transmission rates of the channels in the wireless base station 1 in accordance with the first embodiment. When a call is established (when negotiation is carried out), there is used DCCH having a transmission rate of 13.6 kbps (hereinafter, referred to as "DCCH (13.6)", there is used a channel comprised of DTCH having a transmission rate of 12.2 kbps (hereinafter, referred to as "DTCH (12.2)" and DCCH having a transmission rate of 3.4 kbps (hereinafter, referred to as "DCCH (3.4)" multiplexed to each other, during communication is made, and when a call is released, there is used DCCH (13.6).

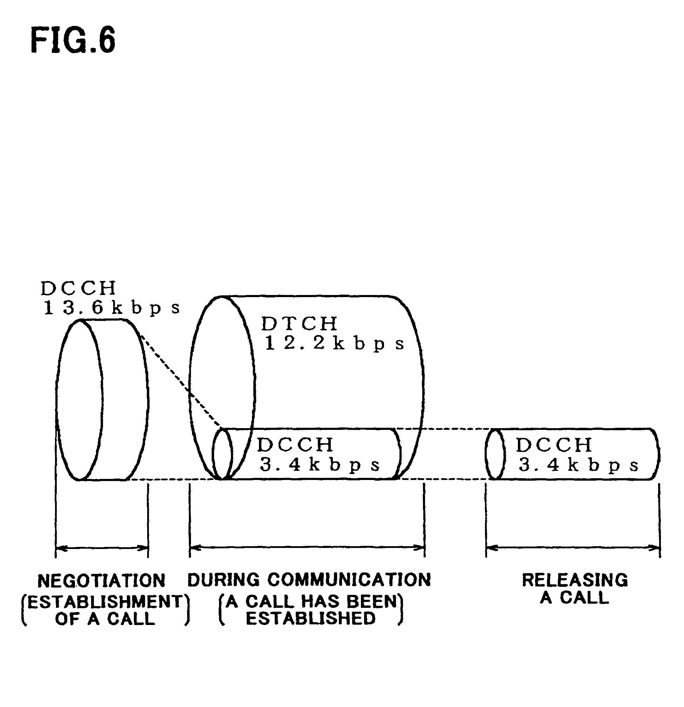

FIG. 6 shows a second example of a relation between channels used for establishing a call, establishing communication, and releasing a call, and transmission rates of the channels in the wireless base station 1 in accordance with the first embodiment. When a call is established (when negotiation is carried out), there is used DCCH (13.6), there is used a channel comprised of DTCH (12.2) and DCCH (3.4) multiplexed to each other, during communication is made, and when a call is released, there is used DCCH (3.4).

FIG. 2 is a flow-chart showing an example of an operation to be carried out by the wireless base station 1 for establishing a call. Hereinbelow is explained the operation (negotiation) to be carried out by the wireless base station 1 for establishing a call with the mobile terminal 3, with reference to FIG. 2.

First, assignment of a wire-section ID is carried out as follows.

The wireless base station 1 receives a message requesting establishment of a wire-section ID, from the host node 2 through the host node I/F 11 (step S21 in FIG. 2).

In accordance with the received message, the wireless channel controller 12 of the wireless base station 1 stores, as user data, various parameters relating to a wire section disposed upstream of the wireless channel controller 12 (parameters relating to data used for establishing DCCH (13.6), such as a band of a wire section), and assigns a wire-section ID included in the received message, to the user data (step S22 in FIG. 2).

Then, the wireless base station 1 receives a message requesting establishment of a wireless-section ID, from the host node 2 through the host node I/F 11 (step S23 in FIG. 2).

The wireless channel controller 12 of the wireless base station 1, in accordance with the received message, stores, as user data, various parameters (parameters relating to data used for establishing DCCH (13.6), such as a band of a wireless section, power to be fed, or a wire-section ID to link with) relating to a wireless section disposed downstream of the wireless channel controller 12, and assigns a wireless-section ID included in the received message, to the user data (step S24 in FIG. 2).

Then, the wireless channel controller 12 links the wire-section ID and the wireless-section ID with each other, assigns a resource to them, and outputs an instruction to the wireless resource unit 13 to ensure the thus assigned resource (step S25 in FIG. 2).

For instance, a resource is comprised of a modem. A modem has constant capacity of upwardly and downwardly transmitting signals. Hence, when communication at a high transmission rate, such as packet communication, is to be carried out (for instance, communication at a transmission rate of 64 kbps, 128 kbps, 256 kbps or 384 kbps), a plurality of modems is assigned to a user. When communication at a low transmission rate, such as voice communication, is to be carried out (for instance, communication at a transmission rate of 12.2 kbps), one modem is assigned to a user.

In the present embodiment, since DCCH (13.6) is to be established, the number of modems sufficient to ensure a transmission rate is assigned to a user.

Then, for instance, the wireless resource unit 13 having a plurality of modems, on receipt of an instruction from the wireless channel controller 12 to ensure a resource, ensures a resource to be able to accomplish a transmission rate of 13.6 kbps in accordance with the received instruction (step S26 in FIG. 2).

The negotiation is then carried out through DCCH (13.6) having been established in the above-mentioned steps (steps S21 to S26 in FIG. 2), resulting in that a call is established between the wireless base station 1 and the mobile terminal 3 (see "negotiation" in FIGs. 5 and 6).

In the conventional wireless base station 4, as illustrated in FIG. 8, the negotiation was carried out through DCCH (3.4). In contrast, the wireless base station 1 in accordance with the present embodiment carries out the negotiation through DCCH (13.6), as illustrated in FIGs. 5 and 6. Thus, the negotiation is carried out in the wireless base station 1 in accordance with the present embodiment at a speed four times greater than a speed at which the negotiation is carried out in the conventional wireless base station 4 (13.6/3.4 = 4), the wireless base station 1 in accordance with the present embodiment can establish a call in a period of time four times smaller than a period of time in which the conventional wireless base station 4 is necessary to establish a call.

Accordingly, the wireless base station 1 in accordance with the present embodiment can much shorten a period of time for a user to wait until the mobile terminal 3 (user) can make communication.

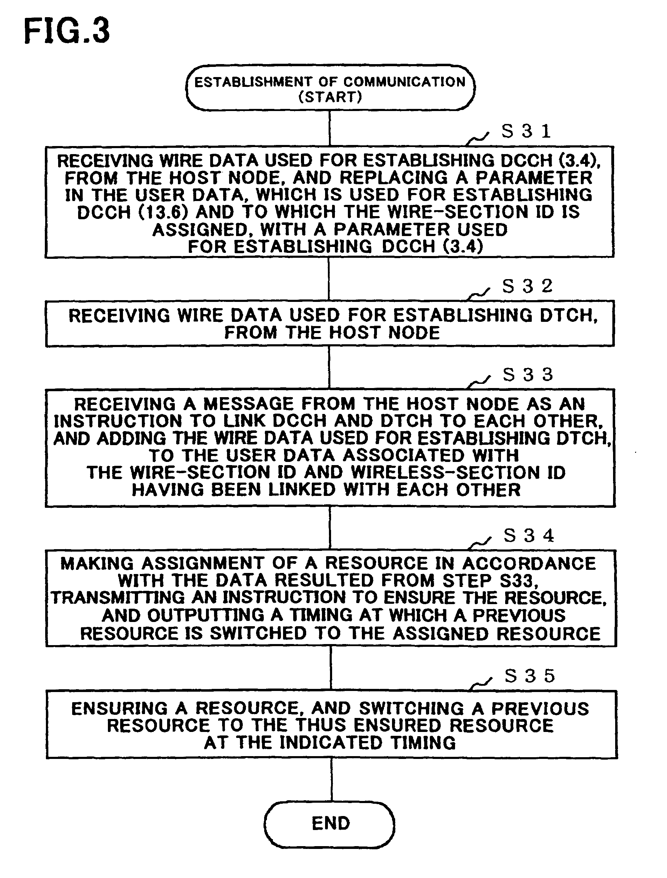

FIG. 3 is a flow-chart showing an example of an operation to be carried out by the wireless base station 1 for establishing communication. Hereinbelow is explained an operation to be carried out by the wireless base station 1 for establishing communication, with reference to FIG. 3.

In the operation, the transmission rate of 13.6 kbps of DCCH having been already established in the negotiation is reduced to 3.4 kbps, and the DCCH having a transmission rate of 3.4 kbps is multiplexed with DTCH used for transmitting user data (for instance, voice signals). The addition of DTCH to DCCH is carried out in accordance with a request received from the host node 2, similarly to the operation of establishing DCCH.

The wireless channel controller 12 of the wireless base station 1 receives wire data used for establishing DCCH (3.4), from the host node 2 through the host node I/F 11, and then, replaces a parameter in the user data, which is used for establishing DCCH (13.6) and to which the wire-section ID is assigned, with a parameter used for establishing DCCH (3.4) (step S31 in FIG. 3).

The wireless channel controller 12 of the wireless base station 1 receives wire data (data including data used for establishing DTCH (12.2)) used for establishing DTCH, from the host node 2 through the host node I/F 11 (step S32 in FIG. 3).

The wireless channel controller 12 of the wireless base station 1 further receives a message from the host node 2 through the host node I/F 11, as an instruction to link DCCH (3.4) and DTCH (12.2) to each other, and then, adds the wire data used for establishing DTCH (12.2), to each of the user data associated with the wire-section ID and wireless-section ID having been linked with each other (step S33 in FIG. 3).

Thereafter, the wireless channel controller 12 makes assignment of a resource in accordance with the data to which the wireless data used for establishing DTCH (12.2) is added, and transmits an instruction to the wireless resource unit 13 to ensure the thus assigned resource.

For instance, the number of modems matching to a transmission rate for establishing DCCH (3.4) and DTCH (12.2) is assigned to a user.

The wireless channel controller 12 further outputs an instruction indicative of a timing (for instance, time) at which a previous resource is switched to the thus assigned resource, to the wireless resource unit 13 (step S34 in FIG. 3).

On receipt of the instruction from the wireless channel controller 12 to ensure the resource, the wireless resource unit 13 ensures a resource to accomplish a transmission rate of 15.6 kbps (resulted from multiplexing 3.4 kbps of DCCH and 12.2 kbps of DTCH with each other) in accordance with the received instruction, and switches a previous resource to the thus ensured resource at a timing indicated in the instruction received from the wireless channel controller 12 (step S35 in FIG. 3).

In accordance with the above-mentioned steps (steps S31 to S35 in FIG. 3), communication having a transmission rate of 15.6 kbps is established (see "during communication" in FIGs. 5 and 6).

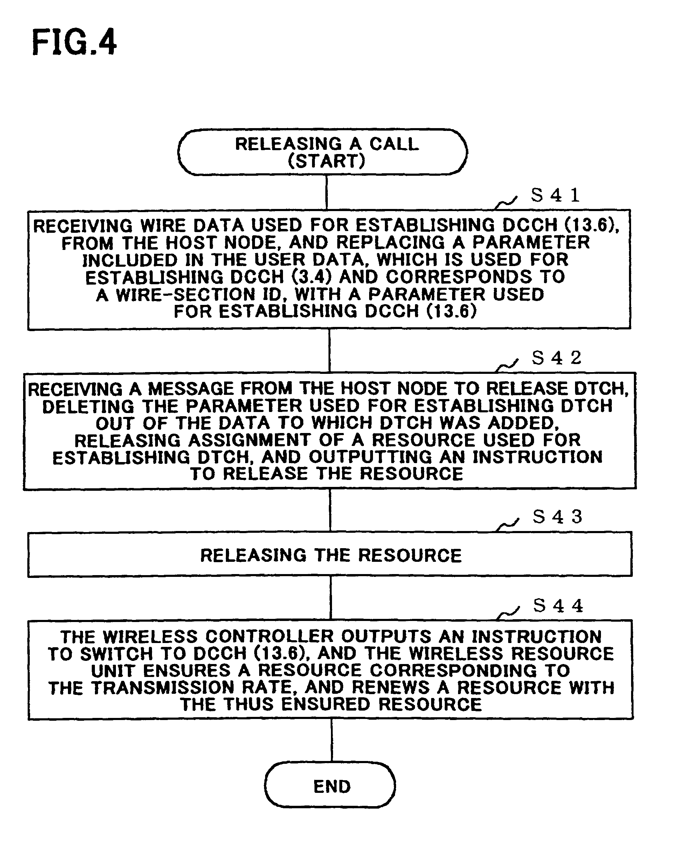

FIG. 4 is a flow-chart showing an example of an operation to be carried out by the wireless base station 1 for releasing a call. Hereinbelow is explained an operation to be carried out by the wireless base station 1 for releasing a call, with reference to FIG. 4.

In the operation, DTCH (12.2) is released out of the communication established by DCCH (3.4) and DTCH (12.2) multiplexed to each other, and further, a transmission rate of DCCH is switched to 13.6 kbps from 3.4 kbps. A call is released through the thus switched DCCH (13.6).

The wireless channel controller 12 of the wireless base station 1 receives wire data used for establishing DCCH (13.6), from the host node 2 through the host node I/F 11, and replaces a parameter included in the user data, which is used for establishing DCCH (3.4) and to which a wire-section ID is assigned, with a parameter used for establishing DCCH (13.6) (step S41 in FIG. 4).

The wireless channel controller 12 of the wireless base station 1 receives a message from the host node 2 through the host node I/F 11 to release DTCH out of a call now being established, deletes the parameter used for establishing DTCH out of the data to which the wire data used for establishing DTCH was added in the operation (step S33 in FIG. 3) having been carried out for establishing communication, releases assignment of a resource used for establishing DTCH, and outputs an instruction to the wireless resource unit 13 to release the resource (step S42 in FIG. 4).

On receipt of the instruction to release the resource, from the wireless channel controller 12, the wireless resource unit 13 releases the resource corresponding to a transmission rate of DTCH, having been ensured for DTCH (step S43 in FIG. 4).

The wireless channel controller 12 outputs an instruction to the wireless resource unit 13 to switch to DCCH (13.6). On receipt of the instruction, the wireless resource unit 13 ensures a resource corresponding to a transmission rate of 13.6 kbps, and renews a resource with the thus ensured resource (step S44 in FIG. 4).

A call is released through DCCH (13.6) established in accordance with the above-mentioned steps (steps S41 to S44 in FIG. 4) (see "releasing a call" in FIG. 5).

In the conventional wireless base station 4, as illustrated in FIG. 8, a call was released through DCCH (3.4). In contrast, the wireless base station 1 in accordance with the present embodiment releases a call through DCCH (13.6), as illustrated in FIG. 5. Thus, a call is released in the wireless base station 1 in accordance with the present embodiment at a speed four times greater than a speed at which a call is released in the conventional wireless base station 4 (13.6 /3.4 = 4), the wireless base station 1 in accordance with the present embodiment can release a call in a period of time four times smaller than a period of time in which the conventional wireless base station 4 is necessary to release a call.

Accordingly, the wireless base station 1 in accordance with the present embodiment can rapidly release a channel established between the wireless base station 1 and the mobile terminal 3.

In the above-mentioned embodiment, the wireless base station 1 releases DTCH (12.2) out of the communication established through a channel comprised of DCCH (3.4) and DTCH (12.2) multiplexed to each other, switches a transmission rate of DCCH to 13.6 kbps from 3.4 kbps, and releases a call through the thus switched DCCH (13.6). As an alternative, similarly to releasing a call, carried out by the conventional wireless base station 4 illustrated in FIG. 8, the wireless base station 1 may merely release DTCH (12.2) out of the communication established through a channel comprised of DCCH (3.4) and DTCH (12.2) multiplexed to each other, for releasing a call through DCCH (3.4), in which case, a transmission rate of DCCH is not switched (see "releasing a call" in FIG. 6).

### INDUSTRIAL APPLICABILITY

As having been explained so far, in the wireless base station in accordance with the present invention, DCCH used for establishing a call is designed to have a transmission rate higher than a transmission rate of DCCH in a channel comprised of DTCH and DCCH multiplexed to each other, used for establishing and maintaining communication. A call is established through DCCH having the thus increased transmission rate. Accordingly, it is possible to shorten a stand-by time in which a user has to wait until communication starts.

Furthermore, DCCH used for releasing a call is designed to have a transmission rate higher than a transmission rate of DCCH in a channel comprised of DTCH and DCCH multiplexed to each other, used for establishing and maintaining communication. A call is released through DCCH having the thus increased transmission rate. Accordingly, it is possible to rapidly release a channel established between the wireless base station and a user.

## Claims

1. A wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other,
**characterized in that** said dedicated control channel (DCCH) used for establishing a call is designed to have a transmission rate higher than a transmission rate of said dedicated control channel (DCCH) in said channel comprised of said dedicated traffic channel (DTCH) and said dedicated control channel (DCCH) multiplexed to each other.

2. The wireless base station as set forth in claim 1, wherein said dedicated control channel (DCCH) used for establishing a call has a transmission rate of 13.6 kbps, and said dedicated control channel (DCCH) used for establishing communication has a transmission rate of 3.4 kbps.

3. The wireless base station as set forth in claim 1 or 2, wherein said call is established through said dedicated control channel (DCCH), and said communication is established through said dedicated traffic channel (DTCH) and said dedicated control channel (DCCH) both in accordance with code division multiple access (CDMA).

4. A wireless base station which, on receipt of an instruction from a host node, establishes a call through a dedicated control channel (DCCH), establishes communication through a channel comprised of a dedicated traffic channel (DTCH) and a dedicated control channel (DCCH) multiplexed to each other, and releases a call through a dedicated control channel (DCCH),
**characterized in that** said dedicated control channel (DCCH) used for releasing a call is designed to have a transmission rate higher than a transmission rate of said dedicated control channel (DCCH) in said channel comprised of said dedicated traffic channel (DTCH) and said dedicated control channel (DCCH) multiplexed to each other.

5. The wireless base station as set forth in claim 4, wherein said dedicated control channel (DCCH) used for releasing a call has a transmission rate of 13.6 kbps, and said dedicated control channel (DCCH) used for establishing communication has a transmission rate of 3.4 kbps.

6. A wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other,
**characterized by**
a wireless channel controller which, in order to establish a channel used for establishing a call, receives an instruction from said host node to establish said dedicated control channel (DCCH) having a predetermined first transmission rate, determines resources in accordance with the received instruction, outputs a first instruction for ensuring the determined resources, receives both an instruction to establish said dedicated control channel (DCCH) having a predetermined second transmission rate lower than said predetermined first transmission rate, and an instruction to establish said dedicated traffic channel (DTCH), from said host node, determines resources in accordance with the received instructions, and outputs a second instruction for ensuring the determined resources, after said call has been established, in order to establish communication, and
a wireless resource unit which, on receipt of said first instruction, ensures resources in accordance with said predetermined first transmission rate, and, on receipt of said second instruction, ensures resources in accordance with said predetermined second transmission rate and a transmission rate of said DTCH.

7. The wireless base station as set forth in claim 6, wherein said wireless channel controller receives an instruction from said host node to release said dedicated traffic channel (DTCH), after said communication has been established, in order to establish a channel used for releasing said call, releases assignment of resources used for establishing said dedicated traffic channel (DTCH) in accordance with said instruction, and outputs a third instruction for releasing said resources, and
said wireless resource unit receives said third instruction, and releases resources, corresponding to a transmission rate of said dedicated traffic channel (DTCH), having been ensured for said dedicated traffic channel (DTCH).

8. The wireless base station as set forth in claim 6, wherein said wireless channel controller receives an instruction from said host node to release said dedicated traffic channel (DTCH), after said communication has been established, in order to establish a channel used for releasing said call, releases assignment of resources used for establishing said dedicated traffic channel (DTCH) in accordance with said instruction, outputs a third instruction for releasing said resources, receives an instruction to establish said DCCH having said predetermined first transmission rate, determines resources in accordance with the thus received instruction, and outputs said first instruction for ensuring the determined resources, and
said wireless resource unit receives said third instruction, releases resources, corresponding to a transmission rate of said dedicated traffic channel (DTCH), having been ensured for said dedicated traffic channel (DTCH), and receives said first instruction to ensure resources corresponding to said predetermined first transmission rate.

9. A wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other,
**characterized by**
a wireless channel controller which, in order to establish a channel used for establishing a call, assigns wire-section ID to a parameter relating to a wire-section used for establishing said dedicated control channel (DCCH) having a predetermined first transmission rate, in accordance with an instruction received from said host node, stores said parameter therein as user data, assigns wireless-section ID to a parameter relating to a wireless-section used for establishing said dedicated control channel (DCCH) having said predetermined first transmission rate, in accordance with an instruction received from said host node, stores said parameter therein as user data, links said wire-section ID and said wireless-section ID to each other, determines resources in accordance with said predetermined first transmission rate, outputs a first instruction to ensure the thus determined resources, receives first wire data from said host node to establish said dedicated control channel (DCCH) having a predetermined second transmission rate lower than said first transmission rate, replaces said parameter in said user data, which is used for establishing said dedicated control channel (DCCH) having said first transmission rate, and to which said wire-section ID was assigned, with a parameter used for establishing said dedicated control channel (DCCH) having said predetermined second transmission rate, receives second wire data used for establishing said dedicated traffic channel (DTCH), and an instruction for linking said dedicated control channel (DCCH) and said dedicated traffic channel (DTCH) to each other, from said host node, adds said second wire data to user data associated with said wire-section ID and user data associated with said wireless-section ID to establish said dedicated traffic channel (DTCH), determines resources in accordance with said second transmission rate and a transmission rate of said dedicated traffic channel (DTCH), and outputs a second instruction to ensure the determined resources, and
a wireless resource unit which, on receipt of said first instruction, ensures resources in accordance with said predetermined first transmission rate, and, on receipt of said second instruction, ensures resources in accordance with said predetermined second transmission rate and a transmission rate of said dedicated traffic channel (DTCH).

10. The wireless base station as set forth in claim 9, wherein said wireless channel controller deletes a parameter used for establishing said dedicated traffic channel (DTCH), out of data to which said second wire data used for establishing said dedicated traffic channel (DTCH) is added, in accordance with an instruction received from said host node, after said communication has been established, in order to establish a channel used for releasing said call, releases assignment of resources used for establishing said dedicated traffic channel (DTCH), and outputs a third instruction for releasing said resources, and
said wireless resource unit receives said third instruction, and releases resources, corresponding to a transmission rate of said dedicated traffic channel (DTCH), having been ensured for said dedicated traffic channel (DTCH).

11. The wireless base station as set forth in claim 9, wherein said wireless channel controller receives third wire data used for establishing said dedicated control channel (DCCH) having said first transmission rate, from said host node, after said communication has been established, in order to establish a channel used for releasing said call, replaces a parameter in said user data, which is used for establishing said dedicated control channel (DCCH) having said second transmission rate, and to which said wire-section ID was assigned, with a parameter used for establishing said dedicated control channel (DCCH) having said predetermined first transmission rate, deletes a parameter used for establishing said dedicated traffic channel (DTCH), out of data to which said second wire data used for establishing said dedicated traffic channel (DTCH) is added, in accordance with an instruction received from said host node, releases assignment of resources used for establishing said dedicated traffic channel (DTCH), outputs a third instruction for releasing said resources, and outputs a fourth instruction to switch to said dedicated control channel (DCCH) having said first transmission rate, and
said wireless resource unit, on receipt of said third instruction, releases resources, corresponding to a transmission rate of said dedicated traffic channel (DTCH), having been ensured for said dedicated traffic channel (DTCH), and, on receipt of said fourth instruction, ensures resources corresponding to said first transmission rate.

12. A wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other,
**characterized by**
a wireless channel controller which, in order to establish a channel used for establishing a call, receives a request of establishing a wire-section ID from said host node, stores, as user data, a parameter relating to a wire-section used for establishing said dedicated control channel (DCCH) having a predetermined first transmission rate, in accordance with said request, assigns a wire-section ID included in said request of establishing said wire-section ID, to said user data, receives a request of establishing a wireless-section ID from said host node, stores, as user data, a parameter relating to a wireless-section used for establishing said dedicated control channel (DCCH) having said first transmission rate, in accordance with said request, assigns a wireless-section ID included in said request of establishing said wireless-section ID, to said user data, links said wire-section ID and said wireless-section ID to each other, determines resources in accordance with said predetermined first transmission rate, outputs a first instruction to ensure the thus determined resources, receives first wire data from said host node to establish said dedicated control channel (DCCH) having a predetermined second transmission rate lower than said first transmission rate, after a call has been established, in order to establish a channel used for establishing communication, replaces said parameter in said user data, which is used for establishing said dedicated control channel (DCCH) having said first transmission rate, and to which said wire-section ID was assigned, with a parameter used for establishing said dedicated control channel (DCCH) having said predetermined second transmission rate, in accordance with said first wire data, receives second wire data used for establishing said dedicated traffic channel (DTCH) from said host node, receives an instruction for linking said dedicated control channel (DCCH) and said dedicated traffic channel (DTCH) to each other, from said host node, adds said second wire data to user data associated with said wire-section ID and user data associated with said wireless-section ID to establish said dedicated traffic channel (DTCH), determines resources in accordance with said second transmission rate and a transmission rate of said dedicated traffic channel (DTCH), based on said second wire data, and outputs a second instruction to ensure the determined resources,
a wireless resource unit which, on receipt of said first instruction, ensures resources in accordance with said predetermined first transmission rate, and, on receipt of said second instruction, ensures resources in accordance with said predetermined second transmission rate and a transmission rate of said dedicated traffic channel (DTCH).

13. The wireless base station as set forth in claim 12, wherein said wireless channel controller, after said communication has been established, in order to establish a channel used for releasing a call, receives a message from said host node to release said dedicated traffic channel (DTCH), deletes a parameter used for establishing said dedicated traffic channel (DTCH), out of data to which said second wire data used for establishing said dedicated traffic channel (DTCH) is added, in accordance with said message, releases assignment of resources used for establishing said dedicated traffic channel (DTCH), and outputs a third instruction for releasing said resources, and
said wireless resource unit receives said third instruction, and, in accordance with said third instruction, releases resources, corresponding to a transmission rate of said dedicated traffic channel (DTCH), having been ensured for said dedicated traffic channel (DTCH).

14. The wireless base station as set forth in claim 12, wherein said wireless channel controller receives third wire data used for establishing said dedicated control channel (DCCH) having said first transmission rate, from said host node, after said communication has been established, in order to establish a channel used for releasing said call, replaces a parameter in said user data, which is used for establishing said dedicated control channel (DCCH) having said second transmission rate, and to which said wire-section ID was assigned, with a parameter used for establishing said dedicated control channel (DCCH) having said predetermined first transmission rate, in accordance with said third wire data, receives a message from said host node for releasing said dedicated traffic channel (DTCH), deletes a parameter used for establishing said dedicated traffic channel (DTCH), out of data to which said second wire data used for establishing said dedicated traffic channel (DTCH) is added, in accordance with an instruction received from said host node, releases assignment of resources used for establishing said dedicated traffic channel (DTCH), in accordance with said message, outputs a third instruction for releasing said resources, and outputs a fourth instruction to switch to said dedicated control channel (DCCH) having said first transmission rate, and
said wireless resource unit receives said third instruction, releases resources, corresponding to a transmission rate of said dedicated traffic channel (DTCH), having been ensured for said dedicated traffic channel (DTCH), and, on receipt of said fourth instruction, ensures resources corresponding to said first transmission rate.

15. The wireless base station as set forth in any one of claims 6 to 14, wherein said first transmission rate is set equal to 13.6 kbps, and said second transmission rate is set equal to 3.4 kbps.

16. The wireless base station as set forth in any one of claims 6 to 15, wherein said call is established through said dedicated control channel (DCCH), and said communication is established through said dedicated traffic channel (DTCH) and said dedicated control channel (DCCH) both in accordance with CDMA.

17. A method of establishing a call in a wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other,
**characterized by** the step of designing said dedicated control channel (DCCH) used for establishing a call is designed to have a transmission rate higher than a transmission rate of said dedicated control channel (DCCH) in said channel comprised of said dedicated traffic channel (DTCH) and said dedicated control channel (DCCH) multiplexed to each other.

18. The method as set forth in claim 17, wherein said dedicated control channel (DCCH) used for establishing a call has a transmission rate of 13.6 kbps, and said dedicated control channel (DCCH) used for establishing communication has a transmission rate of 3.4 kbps.

19. The method as set forth in claim 17 or 18, wherein said call is established through said dedicated control channel (DCCH), and said communication is established through said dedicated traffic channel (DTCH) and said dedicated control channel (DCCH) both in accordance with code division multiple access (CDMA).

20. A method of releasing a call in a wireless base station which, on receipt of an instruction from a host node, establishes a call through a dedicated control channel (DCCH), establishes communication through a channel comprised of a dedicated traffic channel (DTCH) and a dedicated control channel (DCCH) multiplexed to each other, and releases a call through a dedicated control channel (DCCH),
**characterized by** the step of designing said dedicated control channel (DCCH) used for releasing a call is designed to have a transmission rate higher than a transmission rate of said dedicated control channel (DCCH) in said channel comprised of said dedicated traffic channel (DTCH) and said dedicated control channel (DCCH) multiplexed to each other.

21. The method as set forth in claim 20, wherein said dedicated control channel (DCCH) used for releasing a call has a transmission rate of 13.6 kbps, and said dedicated control channel (DCCH) used for establishing communication has a transmission rate of 3.4 kbps.

22. A method of establishing and releasing a call in wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other,
**characterized by** the steps of:
receiving an instruction from said host node to establish said dedicated control channel (DCCH) having a predetermined first transmission rate, in order to establish a channel used for establishing a call, determining resources in accordance with the received instruction, and outputting a first instruction for ensuring the determined resources;
receiving both an instruction to establish said dedicated control channel (DCCH) having a predetermined second transmission rate lower than said predetermined first transmission rate, and an instruction to establish said dedicated traffic channel (DTCH), from said host node, determining resources in accordance with the received instructions, and outputting a second instruction for ensuring the determined resources, after said call has been established, in order to establish communication;
in line with said first instruction, ensuring resources in accordance with said predetermined first transmission rate; and
in line with said second instruction, ensuring resources in accordance with said predetermined second transmission rate and a transmission rate of said DTCH.

23. The method as set forth in claim 22, further comprising the steps of:
receiving an instruction from said host node to release said dedicated traffic channel (DTCH), after said communication has been established, in order to establish a channel used for releasing said call, releasing assignment of resources used for establishing said dedicated traffic channel (DTCH) in accordance with said instruction, and outputting a third instruction for releasing said resources; and
in line with said third instruction, releasing resources, corresponding to a transmission rate of said dedicated traffic channel (DTCH), having been ensured for said dedicated traffic channel (DTCH).

24. The method as set forth in claim 22, further comprising the steps of:
receiving an instruction from said host node to release said dedicated traffic channel (DTCH), after said communication has been established, in order to establish a channel used for releasing said call, releasing assignment of resources used for establishing said dedicated traffic channel (DTCH) in accordance with said instruction, and outputting a third instruction for releasing said resources;
receiving an instruction from said host node to establish said DCCH having said predetermined first transmission rate, determines resources in accordance with the thus received instruction, and outputting said first instruction for ensuring the determined resources; and
receiving said third instruction, releasing resources, corresponding to a transmission rate of said dedicated traffic channel (DTCH), having been ensured for said dedicated traffic channel (DTCH), and receiving said first instruction to ensure resources corresponding to said predetermined first transmission rate.

25. A method of establishing and releasing a call in a wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other,
**characterized by** the steps of:
in order to establish a channel used for establishing a call, assigning wire-section ID to a parameter relating to a wire-section used for establishing said dedicated control channel (DCCH) having a predetermined first transmission rate, in accordance with an instruction received from said host node, and storing said parameter therein as user data;
assigning wireless-section ID to a parameter relating to a wireless-section used for establishing said dedicated control channel (DCCH) having said predetermined first transmission rate, in accordance with an instruction received from said host node, and storing said parameter therein as user data;
linking said wire-section ID and said wireless-section ID to each other, determining resources in accordance with said predetermined first transmission rate, and outputting a first instruction to ensure the thus determined resources;
receiving first wire data from said host node to establish said dedicated control channel (DCCH) having a predetermined second transmission rate lower than said first transmission rate, and replacing said parameter in said user data, which is used for establishing said dedicated control channel (DCCH) having said first transmission rate, and to which said wire-section ID was assigned, with a parameter used for establishing said dedicated control channel (DCCH) having said predetermined second transmission rate;
receiving second wire data used for establishing said dedicated traffic channel (DTCH), and an instruction for linking said dedicated control channel (DCCH) and said dedicated traffic channel (DTCH) to each other, from said host node, adding said second wire data to user data associated with said wire-section ID and user data associated with said wireless-section ID to establish said dedicated traffic channel (DTCH), determining resources in accordance with said second transmission rate and a transmission rate of said dedicated traffic channel (DTCH), and outputting a second instruction to ensure the determined resources;
in line with said first instruction, ensuring resources in accordance with said predetermined first transmission rate; and
in line with said second instruction, ensuring resources in accordance with said predetermined second transmission rate and a transmission rate of said dedicated traffic channel (DTCH).

26. The method as set forth in claim 25, further comprising the steps of
deleting a parameter used for establishing said dedicated traffic channel (DTCH), out of data to which said second wire data used for establishing said dedicated traffic channel (DTCH) is added, in accordance with an instruction received from said host node, after said communication has been established, in order to establish a channel used for releasing said call, releasing assignment of resources used for establishing said dedicated traffic channel (DTCH), and outputting a third instruction for releasing said resources; and
receiving said third instruction, and releasing resources, corresponding to a transmission rate of said dedicated traffic channel (DTCH), having been ensured for said dedicated traffic channel (DTCH).

27. The method as set forth in claim 25, further comprising the steps of
receiving third wire data used for establishing said dedicated control channel (DCCH) having said first transmission rate, from said host node, after said communication has been established, in order to establish a channel used for releasing said call, and replacing a parameter in said user data, which is used for establishing said dedicated control channel (DCCH) having said second transmission rate, and to which said wire-section ID was assigned, with a parameter used for establishing said dedicated control channel (DCCH) having said predetermined first transmission rate;
deleting a parameter used for establishing said dedicated traffic channel (DTCH), out of data to which said second wire data used for establishing said dedicated traffic channel (DTCH) is added, in accordance with an instruction received from said host node, releasing assignment of resources used for establishing said dedicated traffic channel (DTCH), outputting a third instruction for releasing said resources, and outputting a fourth instruction to switch to said dedicated control channel (DCCH) having said first transmission rate; and
on receipt of said third instruction, releasing resources, corresponding to a transmission rate of said dedicated traffic channel (DTCH), having been ensured for said dedicated traffic channel (DTCH), and, on receipt of said fourth instruction, ensuring resources corresponding to said first transmission rate.

28. A method of establishing and releasing a call in a wireless base station which, on receipt of an instruction from a host node, establishes a call through a dedicated control channel (DCCH), and establishes communication through a channel comprised of a dedicated traffic channel (DTCH) and a dedicated control channel (DCCH) multiplexed to each other,
**characterized by** the steps of:
in order to establish a channel used for establishing a call, receiving a request of establishing a wire-section ID from said host node, storing, as user data, a parameter relating to a wire-section used for establishing said dedicated control channel (DCCH) having a predetermined first transmission rate, in accordance with said request, and assigning a wire-section ID included in said request of establishing said wire-section ID, to said user data;
receiving a request of establishing a wireless-section ID from said host node, storing, as user data, a parameter relating to a wireless-section used for establishing said dedicated control channel (DCCH) having said first transmission rate, in accordance with said request, and assigning a wireless-section ID included in said request of establishing said wireless-section ID, to said user data;
linking said wire-section ID and said wireless-section ID to each other, determining resources in accordance with said predetermined first transmission rate, and outputting a first instruction to ensure the thus determined resources;
receiving first wire data from said host node to establish said dedicated control channel (DCCH) having a predetermined second transmission rate lower than said first transmission rate, after a call has been established, in order to establish a channel used for establishing communication, and replacing said parameter in said user data, which is used for establishing said dedicated control channel (DCCH) having said first transmission rate, and to which said wire-section ID was assigned, with a parameter used for establishing said dedicated control channel (DCCH) having said predetermined second transmission rate, in accordance with said first wire data;
receiving second wire data used for establishing said dedicated traffic channel (DTCH) from said host node, receiving an instruction for linking said dedicated control channel (DCCH) and said dedicated traffic channel (DTCH) to each other, from said host node, adding said second wire data to user data associated with said wire-section ID and user data associated with said wireless-section ID to establish said dedicated traffic channel (DTCH), determining resources in accordance with said second transmission rate and a transmission rate of said dedicated traffic channel (DTCH), based on said second wire data, and outputting a second instruction to ensure the determined resources;
in line with said first instruction, ensuring resources in accordance with said predetermined first transmission rate; and
in line with said second instruction, ensuring resources in accordance with said predetermined second transmission rate and a transmission rate of said dedicated traffic channel (DTCH).

29. The method as set forth in claim 28, further comprising the steps of:
after said communication has been established, in order to establish a channel used for releasing a call, receiving a message from said host node to release said dedicated traffic channel (DTCH), deleting a parameter used for establishing said dedicated traffic channel (DTCH), out of data to which said second wire data used for establishing said dedicated traffic channel (DTCH) is added, in accordance with said message, releasing assignment of resources used for establishing said dedicated traffic channel (DTCH), and outputting a third instruction for releasing said resources; and
in line with said third instruction, releasing resources, corresponding to a transmission rate of said dedicated traffic channel (DTCH), having been ensured for said dedicated traffic channel (DTCH).

30. The method as set forth in claim 28, further comprising the steps of:
receiving third wire data used for establishing said dedicated control channel (DCCH) having said first transmission rate, from said host node, after said communication has been established, in order to establish a channel used for releasing said call, and replacing a parameter in said user data, which is used for establishing said dedicated control channel (DCCH) having said second transmission rate, and to which said wire-section ID was assigned, with a parameter used for establishing said dedicated control channel (DCCH) having said predetermined first transmission rate, in accordance with said third wire data;
receiving a message from said host node for releasing said dedicated traffic channel (DTCH), deleting a parameter used for establishing said dedicated traffic channel (DTCH), out of data to which said second wire data used for establishing said dedicated traffic channel (DTCH) is added, in accordance with an instruction received from said host node, releasing assignment of resources used for establishing said dedicated traffic channel (DTCH), in accordance with said message, outputting a third instruction for releasing said resources, and outputting a fourth instruction to switch to said dedicated control channel (DCCH) having said first transmission rate; and
in line with said third instruction, releasing resources, corresponding to a transmission rate of said dedicated traffic channel (DTCH), having been ensured for said dedicated traffic channel (DTCH), and, on receipt of said fourth instruction, ensuring resources corresponding to said first transmission rate.

31. The method as set forth in any one of claims 22 to 30, wherein said first transmission rate is set equal to 13.6 kbps, and said second transmission rate is set equal to 3.4 kbps.

32. The method as set forth in any one of claims 22 to 31, wherein said call is established through said dedicated control channel (DCCH), and said communication is established through said dedicated traffic channel (DTCH) and said dedicated control channel (DCCH) both in accordance with CDMA.
